# EUROPÄISCHE PATENTSCHRIFT

(11) **EP 2 620 394 B1**
(45) Veröffentlichungstag und Bekanntmachung des Hinweises auf die Patenterteilung: **16.04.2014**
(21) Anmeldenummer: 12152329.4
(22) Anmeldetag: 24.01.2012
(51) Int. Cl.: B65G 19/02, B65G 47/61

(54) **Förderanlage mit Tragetaschen für Fördergut**
Conveyor assembly with carrying bags for conveyed goods
Dispositif de transport muni de sacs de support pour des marchandises à transporter

(43) Veröffentlichungstag der Anmeldung: 31.07.2013
(73) Patentinhaber: Dürkopp Fördertechnik GmbH, 33703 Bielefeld (DE)
(72) Erfinder: Janzen, Paul, 33619 Bielefeld (DE); Wend, Michael, 33619 Bielefeld (DE)
(74) Vertreter: Rau, Schneck & Hübner Patentanwälte Rechtsanwälte PartGmbB

(56) Entgegenhaltungen:
- EP-A2- 1 891 859
- DE-A1-102004 018 569
- DE-B3- 10 317 742
- US-A- 5 806 657
- US-A- 5 988 072

## Beschreibung

Die Erfindung betrifft eine Förderanlage mit Tragetaschen für Fördergut, insbesondere Kleidungsstücke.

Aus der DE 10 2008 026 720 A1 ist eine Förderanlage mit Tragetaschen für Fördergut bekannt. Die Tragetasche weist einen Rahmen mit einem daran befestigten Taschenbeutel zur Aufnahme eines Förderguts auf. An dem oberen Ende des Rahmens ist ein Tragehaken ausgebildet, der in einer Öse eines auf einer Förderschiene verschiebbar gelagerten Mitnehmers eingehängt ist. Weiter ist der Rahmen mit einem schwenkbaren Bügel ausgebildet, mit dem der Taschenbeutel geöffnet und für die Beladung von einem Fördergut bereitgestellt wird. Mit dieser Ausgestaltung nimmt die Tragetasche in einem unbeladenen, also leeren Zustand eine schlanke Form mit einer kleinsten Breite in Förderrichtung an. Im Gegensatz dazu nimmt die Tragetasche, also der Taschenbeutel, in dem mit dem Fördergut beladenen Zustand eine in Abhängigkeit des Fördergut-Volumens abhängige ausgewölbte Form bis zu einer größten Breite an.

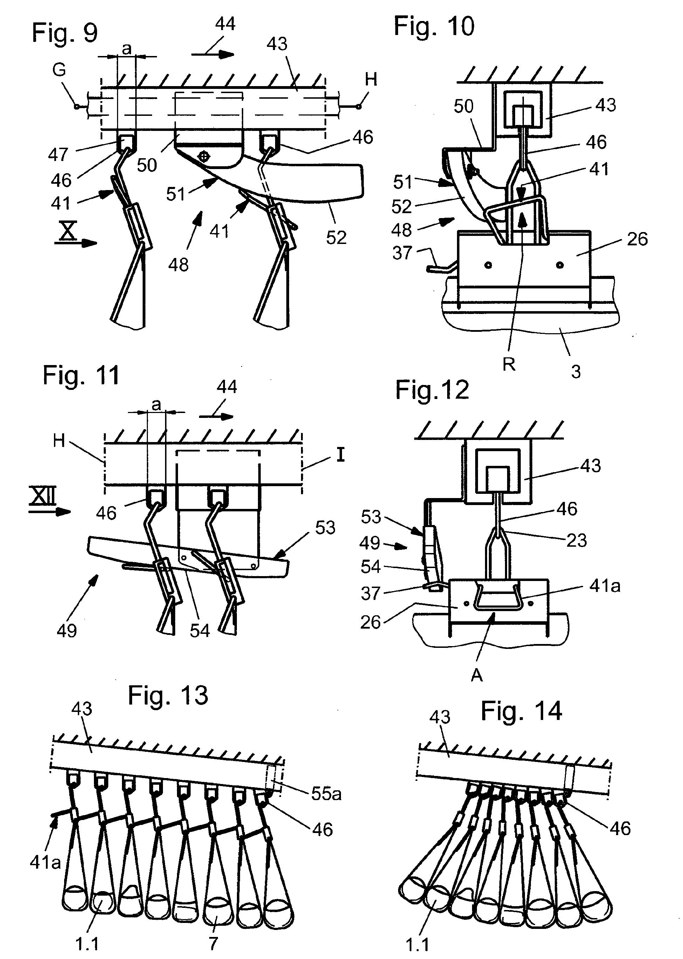

Eine Handhabung derartiger Tragetaschen in ihrem beladenen Zustand ist mit Schwierigkeiten verbunden, wenn Tragetaschen eine Lage mit in nah beieinander befindlichen Aufhängestellen wie in Staustrecken einnehmen und hierbei die mehr Platz beanspruchenden ausgewölbten Taschenbeutel zu einer keilförmigen Anhäufung und damit zu einer Schräglage der Tragetaschen führen, wie es in Fig. 14 dargestellt ist.

Weiter ist aus der DE 103 54 419 A1 eine Hängefördereinrichtung zum Transportieren von Fördergut bekannt, bei der symmetrisch ausgestaltete Fördergutträger vorgesehen sind, die bei einer entsprechenden Beladung mit Fördergut eine lotrechte Lage beibehalten. Nachteilig hierbei ist, dass die Gefahr des Verhakens oder Störungen besonders an geneigten Förderstrecken wie Staustrecken von dicht beieinander befindlichen Fördergutträgern besteht. Diese sind mit dem weiteren Nachteil behaftet, dass die Fördergutträger ungeachtet des Platzbedarfs für unterschiedlich große Fördergut-Stücke einen gleich großen Raum einnehmen.

Staustrecken sind häufig als Strecken mit einem Gefälle von 2 bis 5 % ausgeführt, bei der Tragetaschen aufnehmende Mitnehmer infolge der Schwerkraft oder bei im Wesentlichen waagerecht verlaufenden Staustrecken von einem Antrieb, wie er beispielsweise aus der DE 40 17 821 C2 bekannt ist, angetrieben werden. Bei beiden Antriebsarten wirken auf aufgestaute Tragetaschen Stau-Kräfte ein, die ein Zusammendrücken der Tragetaschen zur Folge haben, was bei bestimmten Fördergut-Arten, beispielsweise bei Bekleidungsstücken, unerwünscht ist. Andererseits ist es für die Wirtschaftlichkeit einer Förderanlage von Bedeutung, dass in Staustrecken von baulich begrenzten Abmessungen eine größtmögliche Anzahl beladener oder leerer Tragetaschen aufgestaut werden kann.

Die US 5 988 072 zeigt bereits Abstandshalter an Tragtaschenhaltern.

Der Erfindung liegt die Aufgabe zugrunde, eine Förderanlage mit einem dem Platzbedarf des Förderguts anpassbaren Taschenbeutel zu schaffen, die ein geordnetes Aufstauen von beladenen Tragetaschen ermöglicht und dabei das Fördergut weitgehend von Stau-Kräften freihält.

Diese Aufgabe wird durch eine Förderanlage mit den Merkmalen des Anspruchs 1 gelöst. Die Ausgestaltung der Tragetasche mit einem zwischen zwei stabilen Endlagen, nämlich einer Arbeitsstellung und einer Ruhestellung, verstellbaren Abstandshalter gestattet eine optimale Platzausnutzung sowohl beim Aufstauen von leeren Tragetaschen bei in der Ruhestellung befindlichen Abstandshaltern als auch beim Aufstauen von beladenen Tragetaschen bei in der Arbeitsstellung befindlichen Abstandshaltern. Weiter wird mit dem in der Arbeitsstellung befindlichen Abstandshalter eine definierte Ausrichtung von benachbarten Tragetaschen begünstigt. Ein besonderer Vorteil wird durch die Sicherstellung eines Mindestabstands benachbarter Tragetaschen erzielt, womit eine weitgehende Entlastung des Förderguts von Stau-Kräften erzielt wird.

Eine völlige Ausschaltung von Stau-Kräften ist selbst in solchen Fällen sicher gestellt, wenn ausschließlich Fördergut mit einem Platzbedarf befördert wird, der der größtmöglichen Breite des Taschenbeutels in Förderrichtung entspricht.

Die Unteransprüche geben vorteilhafte Ausgestaltungen wieder.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Tragetasche der Förderanlage mit geschlossener Beschickungsöffnung in perspektivischer Ansicht,
- Fig. 2: eine Seitenansicht der Tragetasche in einer Ansicht gemäß dem Sichtpfeil II in Fig. 1,
- Fig. 3: eine perspektivische Sicht auf den oberen Teil der Tragetasche bei geöffneter Beschickungsöffnung in einer Ansicht gemäß dem Sichtpfeil III in Fig. 1 in gegenüber Fig. 1 vergrößertem Maßstab,
- Fig. 4: eine Fig. 2 entsprechende Seitenansicht der Tragetasche mit geöffneter Beschickungsöffnung,
- Fig. 5: eine perspektivische Darstellung entsprechend dem Sichtpfeil V in Fig. 3,
- Fig. 6: einen Teilausschnitt aus der Tragetasche mit einem Abstandshalter in einer Arbeitsstellung in vergrößerter perspektivischer Ansicht entsprechend dem Sichtpfeil VI in Fig. 3,
- Fig. 7: eine Darstellung entsprechend Fig. 6 mit dem Abstandshalter in einer Ruhestellung,
- Fig. 8a: einen ersten Teil einer Förderanlage in schematischer Darstellung,
- Fig. 8b: den sich an den ersten Teil der Förderanlage gemäß Fig. 8a anschließenden zweiten Teil der Förderanlage,
- Fig. 9: eine Teilansicht der Förderanlage mit einer ersten Schalt-Vorrichtung,
- Fig. 10: eine Ansicht der ersten Schalt-Vorrichtung entsprechend dem Sichtpfeil X in Fig. 9,
- Fig. 11: eine Teilansicht der Förderanlage mit einer zweiten Schalt-Vorrichtung,
- Fig. 12: eine Ansicht der zweiten Schalt-Vorrichtung entsprechend dem Sichtpfeil XII in Fig. 11,
- Fig. 13: eine Teilansicht einer Staustrecke der Förderanlage nach der Erfindung, und
- Fig. 14: eine Staustrecke einer Förderanlage entsprechend dem Stand der Technik.

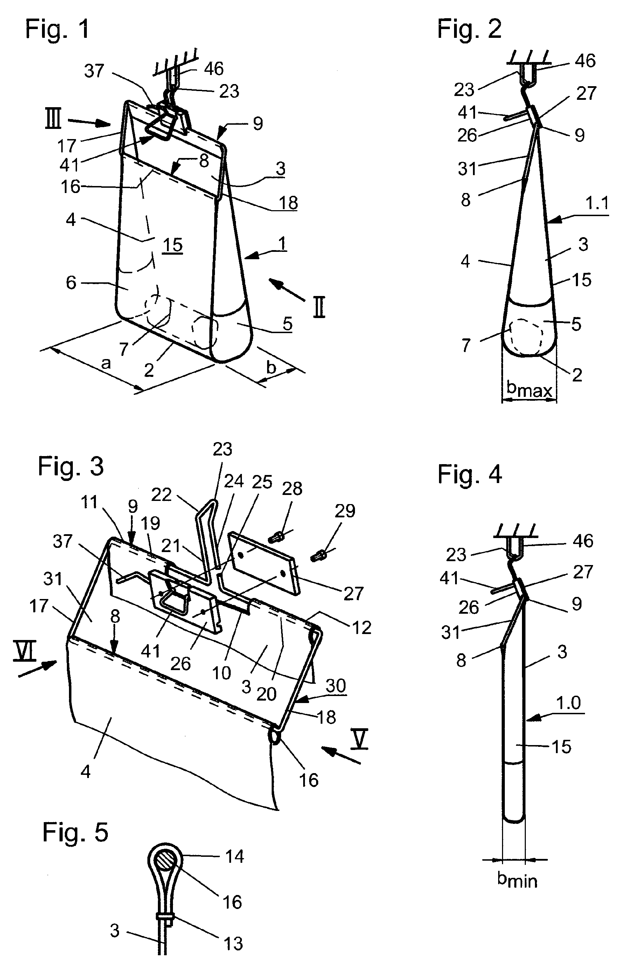

Eine Tragetasche 1 weist einen im Querschnitt halbkreisförmigen Boden 2 und sich davon nach oben erstreckende Wände, nämlich eine Hinterwand 3 und eine Vorderwand 4, auf. Die Hinterwand 3 erstreckt sich weiter nach oben als die Vorderwand 4. Im Bereich des Bodens 2 sind die Hinterwand 3 und die Vorderwand 4 jeweils mittels einer Seitenwand 5 bzw. 6 miteinander verbunden. Die Hinterwand 3 und die Vorderwand 4 weisen eine Breite a auf. Die Seitenwände 5 bzw. 6 weisen eine Breite b auf. Die Wände 3, 4, 5, 6 sind im Querschnitt rechtwinklig zueinander angeordnet. Der Boden 2 und die Wände 3 bis 6 bilden einen nach oben offenen Taschenbeutel 15, in dem ein Fördergut 7, beispielsweise ein Kleidungsstück, aufgenommen werden kann. Wie Fig. 4 entnehmbar ist, weist die hierfür mit 1.0 bezeichnete Tragetasche 1.0 eine minimale Breite bₘᵢₙ auf. In dem mit einem maximal großen Fördergut 7 beladenen, in Fig. 2 dargestellten Zustand weist die hierfür mit 1.1 bezeichnete Tragetasche eine maximale Breite bₘₐₓ auf.

Die Vorderwand 4 weist einen oberen, durch einen Saum 14 gebildeten Rand 8 auf. Die Hinterwand 3 weist einen durch Säume 11, 12 gebildeten oberen Rand 9 auf, der durch einen mittigen Ausschnitt 10 unterbrochen ist. Die Säume 11, 12, 14 sind jeweils durch eine Naht 13 fixiert, wie Figur 5 für den Saum 14 entnehmbar ist. Der durch den Boden 2, die Hinterwand 3, die Vorderwand 4 und die Seitenwände 5, 6 gebildete Taschenbeutel 15 besteht aus biegeschlaffem Material, beispielsweise einem Gewebe oder einer Kunststofffolie; der Taschenbeutel 15 ist also flexibel.

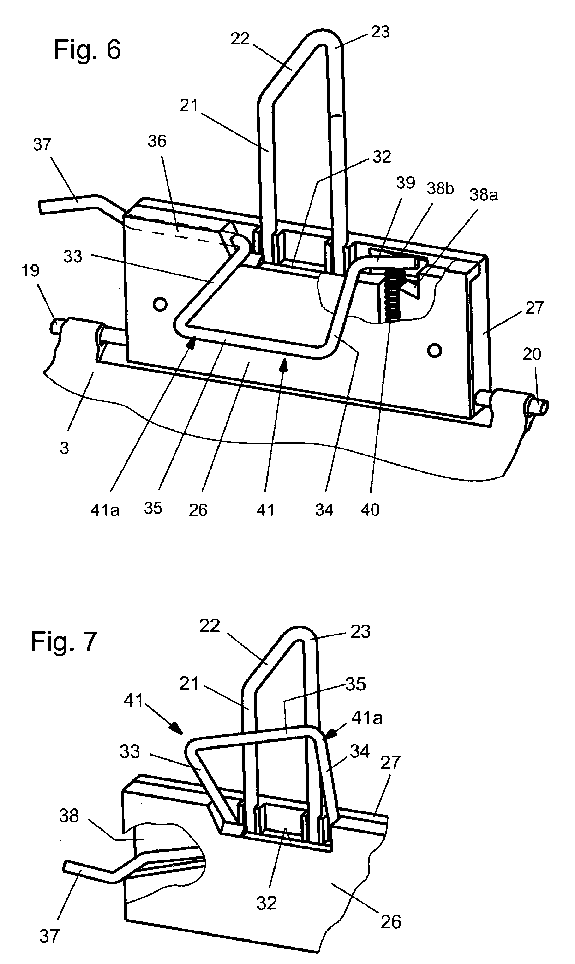

Der Taschenbeutel 15 weist an seinem oberen Ende einen Tragrahmen 30 auf, durch den eine Beschickungsöffnung 31 begrenzt wird. Dieser Tragrahmen 30 besteht aus einer einstückigen runden Stange aus Stahl. Diese Stange ist - wie insbesondere Figur 3 erkennen lässt - zu einem im Wesentlichen rechteckigen Rahmen gebogen. Sie weist eine im Saum 14 der Vorderwand 4 angeordnete Querstange 16, zwei von deren Enden rechtwinklig abgebogene, zur Hinterwand 3 führende Verbindungsstangen 17, 18 und zwei im Saum 9 befindliche, bis zum Ausschnitt 10 führende Querstangen 19, 20 auf. Die Querstangen 19, 20 verlaufen parallel zur Querstange 16. Die Verbindungsstangen 17, 18 verlaufen ebenfalls parallel zueinander. Von der Querstange 19 ist ein Stangenabschnitt 21 nach oben abgebogen. In seinem oberen Bereich ist der Stangenabschnitt 21 mit einem abgewinkelten Abschnitt 22 versehen. Dieser abgewinkelte Abschnitt 22 hat die Form eines auf den Kopf gestellten V, wie Figur 6 und 7 entnehmbar ist. Die Spitze des Abschnitts 22 bildet eine Aufhängestelle 23. Von dem Abschnitt 22 ragt ein Stangenabschnitt 24 nach unten, der parallel zum Stangenabschnitt 21 verläuft. Von der Querstange 20 ist ein kurzer Stangenabschnitt 25 nach oben abgebogen, der fluchtend mit dem Stangenabschnitt 24 verläuft. Zwischen den beiden Stangenabschnitten 24, 25 ist - wie Figur 3 erkennen lässt - ein kleiner offener Spalt.

Die einander benachbarten Bereiche der Querstangen 19, 20 und der Stangenabschnitte 24, 25 und 21 sind in in Fig. 3 nur angedeuteten angepassten Ausnehmungen eines aus Kunststoff bestehenden Blocks 26 aufgenommen und hier mittels eines plattenförmigen Druckstücks 27 verspannt, das mit Schrauben 28, 29 in Form von Senkkopfschrauben an dem Block 26 befestigt ist. Die Querstange 16, die Verbindungsstangen 17, 18, die Querstangen 19, 20 und die benachbarten Teile der Stangenabschnitte 21, 24, 25 und der Block 26 mit dem Druckstück 27 bilden den bereits erwähnten Tragrahmen 30, der die Beschickungsöffnung 31 begrenzt. Der Taschenbeutel 15 mit dem Tragrahmen 30 bildet die Tragetasche 1.

Zwischen dem Block 26 und dem Druckstück 27 ist weiterhin ein Abstandshebel 41 verschwenkbar gelagert. Der Abstandshebel 41 ist aus einer Stange aus Stahl mit rundem Querschnitt, also einem sogenannten Rundstahl, einstückig gebogen. Der Abstandshebel 41 weist einen etwa U-förmig abgebogenen Abstandshebel 41a auf, der zwei Schenkel 33, 34 und einen diese verbindenden Steg 35 aufweist. An den Schenkel 33 schließt sich ein in einer Aussparung 38 des Blocks 26 angeordneter Lagerabschnitt 36 an, dessen aus dem Block 26 seitlich heraustretendes Ende als kurbelartig abgekröpfter Betätigungshebel 37 ausgebildet ist. Für den Abstandshebel 41 bilden der Block 26 und das Druckstück 27 also ein Lagergehäuse, das in der Hängelage der Tragetasche 1 etwa vertikal angeordnet ist.

An den Schenkel 34 schließt sich ein in einer Aussparung 38a des Blocks 26 gelagerter Widerlagerabschnitt 39 an, der von einer vorgespannten Druckfeder 40 nach oben belastet ist. Durch diese Ausgestaltung wird erreicht, dass der Abstandshebel 41 in zwei stabilen Endlagen gehalten wird. In einer in Fig. 6 dargestellten Arbeitsstellung A befindet sich der eigentliche Abstandshalter 41a in einer waagerechten, also im Wesentlichen senkrecht vom Block 26 abstehenden Position. In dieser Arbeitsstellung A befindet sich der abgekröpfte Betätigungshebel 37 in seiner hoch geschwenkten Position.

In einer zweiten als Ruhestellung R bezeichneten und in Fig. 7 dargestellten Position befindet sich der Abstandshebel 41a in einer weitgehend hoch geschwenkten Position, während die Kurbel 37 sich in einer weitgehend nach unten geschwenkten Position befindet. In den Fig. 6 und 7 dargestellten Positionen liegt der Widerlagerabschnitt 39 des Abstandshebels 41 gegen die Wand 38b der Aussparung 38a an, und zwar unter dem Druck der Druckfeder 40. Beim Verschwenken des Abstandshebels 41 aus der Arbeitsposition A in die Ruheposition R und umgekehrt wird der Widerlagerabschnitt 39 von der Wand 38b gegen die Kraft der Druckfeder 40 abgehoben und nach Überwindung eines im mittleren Verschwenkungsbereich liegenden Totpunkts wieder gegen die Wand 38b gedrückt. Die Lage des Abstandshebels 41 und damit des Abstandshalters 41a ist also in sowohl der Arbeitsstellung A als auch in der Ruhestellung R stabil, also gegen unbeabsichtigtes Verschwenken gesichert.

Eine Förderanlage 42 zum Transport der Tragtaschen 1 weist eine ortsfeste Förderschiene 43 mit einem in einer Förderrichtung 44 bewegbaren Zugstrang 45 auf, der in der Förderschiene 43 verschiebbar geführte Mitnehmer 46 mitnimmt. Der Zugstrang 45 wird von einem nicht dargestellten Motor angetrieben.

Die Mitnehmer 46 weisen jeweils eine sich in Förderrichtung 44 erstreckende und quer zur Förderrichtung 44 offene fensterförmige Ausnehmung 47 auf.

Die Tragetasche 1 wird gemäß Figur 7 an dem Mitnehmer 46 befestigt, bevor der Block 26 mit dem Druckstück 27 verschraubt wird, da der Stangenabschnitt 24 durch die Ausnehmung 47 eingeführt werden muss. Die Mitnehmer 46 weisen eine in Förderrichtung 44 gemessene Erstreckung a auf, die gleich oder kleiner ist als die kleinste Breite bₘᵢₙ der unbeladenen Tragetasche 1.0. Dementsprechend können die unbeladenen Tragetaschen 1.0 dicht auf dicht gegeneinander gefahren werden, wobei benachbarte Mitnehmer 46 aneinander anliegen.

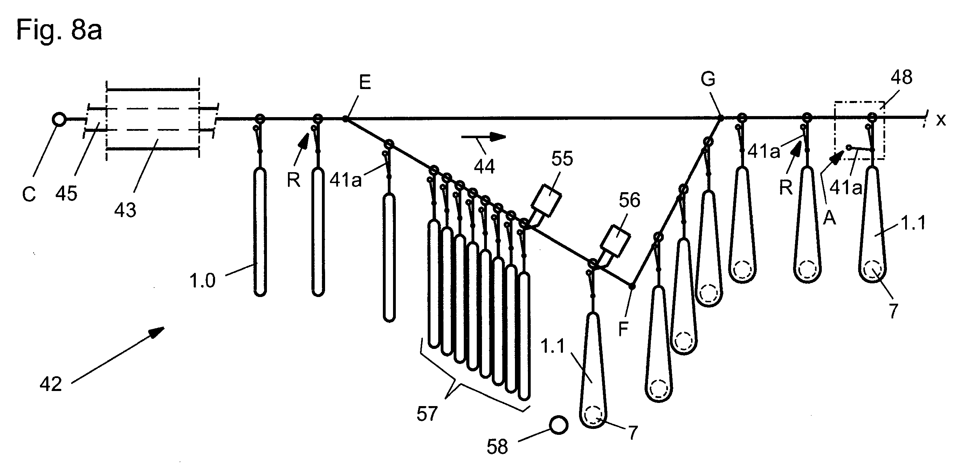

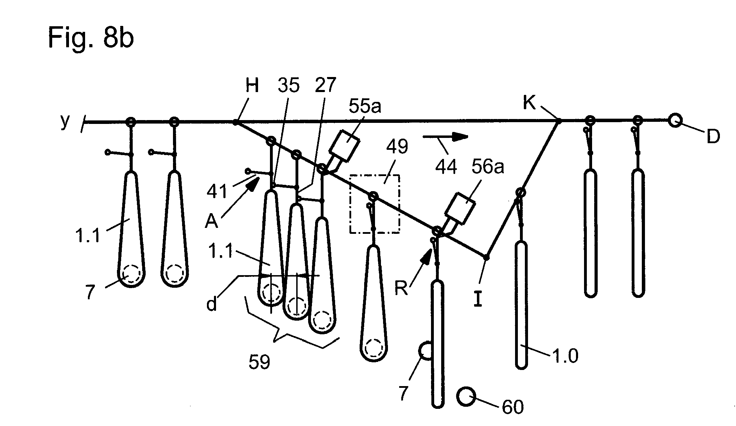

Die Förderanlage 42 erstreckt sich über eine Förderstrecke von einem Punkt C zu einem Punkt D, die nachfolgend als Förderstrecke CD bezeichnet wird. Es sei darauf hingewiesen, dass die Darstellung gemäß Fig. 8a und 8b allein aus Platzgründen an den Punkten x und y getrennt ist, so dass die Förderstrecke CD als ununterbrochen durchlaufend zu betrachten ist.

Die Förderanlage 42 weist eine von der Förderstrecke CD an einer ersten Ausschleus-Stelle E abzweigende Nebenstrecke EF auf, die zu einer Belade-Station 58 führt. Diese Nebenstrecke EF kann abfallend, also ohne Antrieb für die Mitnehmer 46, ausgebildet sein, so dass diese mit den Tragetaschen 1.0 zur Belade-Station 58 hinunter gleiten. Sie weist weiterhin eine vom Endpunkt F der Nebenstrecke EF zur Förderstrecke CD führende erste Zuführstrecke FG auf, die in einer ersten Einschleus-Stelle G in die Förderstrecke CD einmündet. Wenn - wie zuvor geschildert - die Nebenstrecke EF zum Endpunkt F geneigt ausgebildet ist, dann muss in der Regel die Zuführstrecke FG mit einem Antrieb für Mitnehmer 46 mit den Tragetaschen 1 versehen sein. Der der Zuführstrecke FG zugeordnete Antrieb für die Mitnehmer kann beispielsweise gemäß der DE 10 2005 006 455 A1 ausgebildet sein.

In Förderrichtung 44 hinter der ersten Einschleus-Stelle G mündet aus der Förderstrecke CD eine zweite Nebenstrecke HI aus, die zu einer Entlade-Station 60 führt. Von dem Endpunkt E dieser Nebenstrecke HI führt eine zweite Zuführstrecke IK zurück zur Förderstrecke CD. Die von der zweiten Ausschleus-Stelle H zum Endpunkt I führende zweite Nebenstrecke ist grundsätzlich gleich aufgebaut wie die Nebenstrecke EF. Entsprechend ist die zur zweiten Einschleus-Stelle K führende zweite Zuführstrecke IK ausgebildet wie die erste Zuführstrecke FG.

Zwischen der ersten Einschleus-Stelle G und der zweiten Ausschleus-Stelle H ist in der Förderstrecke CD eine erste Schalt-Vorrichtung 48 angeordnet. Eine zweite Schalt-Vorrichtung 49 ist in der zweiten Nebenstrecke HI vorgesehen. Die erste Schalteinrichtung 48 weist eine mittels einer Halterung 50 seitlich und unterhalb der Förderschiene 43 angeordnete erste Kufe 51 auf, die an ihrer Unterseite eine in Förderrichtung 44 nach unten gebogene Führungsfläche 52 aufweist. Wenn eine Tragetasche 1 unter dieser Kufe 51 hindurch gefördert wird, dann kommt - wie Fig. 9 und 10 anschaulich entnehmbar ist - der seitlich über den Stangenabschnitt 21 vorstehende Bereich des eigentlichen Abstandshalters 41a an der Führungsfläche 52 zur Anlage und wird aus der hoch geschwenkten Ruhestellung in die herab geschwenkte Arbeitsstellung A verschwenkt. Die Kurbel 37 wird hierbei in ihre obere Stellung verschwenkt.

Die zweite Schalteinrichtung 49 weist eine ebenfalls seitlich und unterhalb der Förderschiene 43 angeordnete zweite Kufe 53 mit einer unteren Führungsfläche 54 auf. Die Führungsfläche 54 ist in Förderrichtung 44 nach unten geneigt, wie Fig. 11 entnehmbar ist. Wenn die in ihrer hoch geschwenkten Stellung befindliche Kurbel 37 auf diese untere Führungsfläche 54 der zweiten Kufe 53 aufläuft, dann wird sie aufgrund der Neigung der Führungsfläche 54 in Förderrichtung 43 nach unten gedrückt, wodurch - wie wiederum Fig. 11 entnehmbar ist - der Abstandshalter 41a aus der Arbeitsstellung A in die Ruhestellung R hoch geschwenkt wird.

Die Nebenstrecken EF und HI sind jeweils mit identischen, bekannten Stopp-Vorrichtungen 55, 56 bzw. 55a, 56a ausgerüstet. Sie weisen jeweils ein elektrisch oder elektro-pneumatisch ansteuerbares Sperrglied auf, mit dem die Durchfahrt eines Mitnehmers 46 gesperrt oder per Steuerbefehl freigegeben werden kann.

Die Arbeitsweise der Förderanlage 42 wird nachfolgend primär anhand der Fig. 8a und 8b beschrieben.

Leere Tragetaschen 1.0, bei denen sich die Abstandshalter 41a gemäß der Darstellung in den Fig. 7 und 10 in der hoch geschwenkten Ruhestellung R befinden, werden auf der Förderstrecke CD in Förderrichtung 44 bis zur ersten Einschleus-Stelle E befördert, wo sie ausgeschleust werden und auf der Nebenstrecke EF unter Schwerkraft in Richtung auf den Endpunkt F zulaufen. Hierbei sperrt die Stopp-Vorrichtung 55 eine Durchfahrt der Tragetaschen 1.0, so dass Tragetaschen 1.0 in platzsparender Weise ohne jeglichen Zwischenraum zueinander aufgestaut werden. Der Bereich 57 zwischen der ersten Einschleus-Stelle E und der Stopp-Vorrichtung 55 bildet eine erste Staustrecke 57. Nach einem Schaltbefehl von einer zentralen Steuerung gibt die Stopp-Einrichtung 55 die Durchfahrt des in Förderrichtung 44 ersten Mitnehmers 46 mit der entsprechend ersten Tragetasche 1.0 frei. Die Tragetasche 1.0 fährt daraufhin bis vor die weitere der ersten Staustrecke 57 nachgeordnete Stopp-Vorrichtung 56, wodurch die entsprechende Tragetasche 1.0 an der Belade-Station 58 anhält. Hier wird ein Fördergut 7 in die Tragetasche 1.0 geladen. Mit einem Schaltbefehl gibt die Stopp-Vorrichtung 56 die Durchfahrt frei, so dass die beladene Tragetasche 1.1 bis zu dem Endpunkt F der Nebenstrecke EF läuft, wo der Mitnehmer 46 mit der beladenen Tragetasche 1.1 auf die Zuführstrecke FG übergeben und dort bis zur ersten Einschleus-Stelle G gefördert wird. Anschließend erfolgt die Weiterförderung auf der Förderstrecke CD. Im Verlauf dieser Förderung durchläuft die Tragetasche 1.1 die erste Schalt-Vorrichtung 48, in der in der bereits geschilderten Weise der Abstandshebel 41 derartig verschwenkt wird, dass der Abstandshalter 41a in seine herunter geschwenkte Arbeits-Stellung A gebracht wird.

Auf der Förderstrecke CD können die Tragetaschen 1.0 bzw. 1.1 in einem insbesondere in den Fig. 8a und 8b erkennbaren Abstand voneinander gefördert werden, der durch die Ausbildung des die Mitnehmer 46 mitnehmenden Zugstrangs 45 vorgegeben ist. Der Abstand ist in der Regel so groß, dass auch der in der Arbeits-Stellung A befindliche Abstandshalter 41a nicht gegen das Druckstück 27 der nachfolgenden Tragetasche 1.0 bzw. 1.1 zur Anlage kommt. Wenn dagegen die beladenen Tragetaschen 1.1 an der Ausschleus-Stelle H auf die zweite Nebenstrecke HI ausgeschleust werden und hier gegen die Stopp-Vorrichtung 55a laufen, werden sie entsprechend der Darstellung in Fig. 8b auf einem Abstand d voneinander gehalten, der durch die horizontale Erstreckung des Abstandshalters 41a vorgegeben ist, der mit seinem Steg 35 gegen das Druckstück 27 der nächst nachfolgenden Tragetasche 1.1 anliegt. Der Bereich zwischen der zweiten Ausschleus-Stelle H und der Stopp-Vorrichtung 55a bildet eine zweite Staustrecke 59.

Auch hier werden einzelne Tragetaschen 1.1 nacheinander durch eine entsprechende Ansteuerung der Stopp-Vorrichtung 55a freigegeben und gleiten bis vor die der zweiten Staustrecke 59 nachgeordnete Stopp-Vorrichtung 56a, die sich an der Entlade-Station 60 befindet. Auf dem Weg zu dieser Stopp-Vorrichtung 56a läuft die Tragetasche 1.1 unter der zweiten Schalt-Vorrichtung 49 hindurch, wo in der bereits geschilderten Weise der Abstandshebel 41 in seine Ruhestellung R verschwenkt wird.

Nach dem Entladen wird die Tragetasche 1.0 durch die Stopp-Vorrichtung 56a freigegeben und gleitet bis zum Endpunkt I. Von dort wird sie in der zweiten Zuführstrecke IK wieder zur Förderstrecke CD gebracht und dort weitergefördert.

Die Lage der beladenen Tragetaschen 1.1 vor der Stopp-Vorrichtung 55a ist in Fig. 13 noch einmal dargestellt. In Fig. 14 ist dagegen dargestellt, wie die beladenen Tragetaschen 1.1 derart zusammenrutschen würden, dass die Mitnehmer 46 dicht auf dicht in der Förderschiene 43 angeordnet werden. Die Abstandshebel 41 mit den Abstandshaltern 41a führen also dazu, dass beladene Tragetaschen 1.1 in geordneter Form aufgestaut werden können.

## Patentansprüche

1. Förderanlage mit Tragetaschen (1, 1.0, 1.1) für Fördergut (7), insbesondere Kleidungsstücke,
- mit einer Förderstrecke (CD) mit in einer Förderschiene (43) in einer Förderrichtung (44) bewegbaren Mitnehmern (46) zur Auf nahme je einer Tragetasche (1, 1.0, 1.1),
- - wobei die Mitnehmer (46) einzeln in der Förderschiene (43) verschiebbar angeordnet sind,
- - wobei jede Tragetasche (1, 1.0, 1.1) je einen Taschenbeutel (15) mit einer Breite b in Förderrichtung (44) zur Aufnahme von Fördergut (7) aufweist,
- - wobei für die Breite b in unbeladenem Zustand der Tragetasche (1.0) gilt: b = bₘᵢₙ, und
- - wobei für die Breite b in maximal beladenem Zustand der Tragetasche (1.1) gilt: b = bₘₐₓ,
- mit mindestens einer Staustrecke (57, 59),
- mit einem an jeder Tragetasche (1, 1.0, 1.1) angebrachten Abstandshalter (41a), der zwischen einer Ruhestellung (R) und einer Arbeitsstellung (A) verstellbar ist,
- - wobei er in der Arbeitsstellung (A) auf der Staustrecke (59) an einer in Förderrichtung (44) nachfolgenden Tragetasche (1.1) anliegt,
- - wobei der Abstandshalter (41a) derart bemessen ist, dass in der Arbeitsstellung (A) für den Horizontal-Mitten-Abstand d der benachbarten am Abstandhalter (41a) anliegenden Tragetasche (1.1) gilt:
d = bₘₐₓ, und
- - wobei die Lage des Abstandshalters (41a) in der Arbeitsstellung (A) und in der Ruhestellung (R) stabil ist.

2. Förderanlage nach Anspruch 1, **dadurch gekennzeichnet, dass** der Staustrecke (59) eine erste Schalt-Vorrichtung (48) zum Verstellen des Abstandshalters (41a) in die Arbeitsstellung (A) vorgeordnet ist, und
dass der Staustrecke (59) eine zweite Schalt-Vorrichtung (49) zum Verstellen des Abstandshalters (41a) in die Ruhestellung (R) nachgeordnet ist.

3. Förderanlage nach einem der Ansprüche 1 bis 2, **dadurch gekennzeichnet,**
**dass** mindestens eine Schalt-Vorrichtung (48, 49) eine Kufe (51, 53) mit einer Führungsfläche (52, 54) aufweist, die den Abstandshalter (41a) verstellt.

4. Förderanlage nach einem der Ansprüche 1 bis 3, **dadurch gekennzeichnet,**
**dass** der Abstandhalter (41a) in einem im oberen Bereich der Tragetasche (1, 1.0, 1.1) angeordneten Lagergehäuse (26, 27) zwischen der Arbeitsstellung (A) und der Ruhestellung (R) schwenkbar gelagert ist.

5. Förderanlage nach Anspruch 3 und 4, **dadurch gekennzeichnet, dass** der Abstandshalter (41a) mit einem aus dem Lagergehäuse (26, 27) seitlich herausgeführten und kurbelartig abgekröpften Betätigungshebel (37) versehen ist, der mit einer Führungsfläche (54) zum Verschwenken des Abstandshalters (41a) zur Anlage bringbar ist.

6. Förderanlage nach Anspruch 3 und 4, **dadurch gekennzeichnet, dass** der Abstandshalter (41a) unmittelbar mit einer Führungsfläche (52) einer Kufe (51) zum Verschwenken des Abstandshalters (41a) zur Anlage bringbar ist.

7. Förderanlage nach einem der Ansprüche 1 bis 6, **dadurch gekennzeichnet,**
**dass** auf der Staustrecke (59) der Abstandshalter (41a) einer Tragetasche (1.1) gegen ein Druckstück (27) einer unmittelbar nachfolgenden Tragetasche (1.1) anliegt.

8. Förderanlage nach Anspruch 7, **dadurch gekennzeichnet,**
**dass** das Druckstück (27) Teil des Lagergehäuses (26, 27) ist.

9. Förderanlage nach einem der Ansprüche 1 bis 8, **dadurch gekennzeichnet,**
**dass** der Abstandshalter (41a) in dem Lagergehäuse (26, 27) einen Widerlager-Abschnitt (39) aufweist, der mittels einer Druckfeder (40) derart belastet ist, dass der Abstandshalter (41a) in der Arbeitsstellung (A) oder der Ruhestellung (R) gegen unbeabsichtigtes Verschwenken gesichert gehalten wird.

## Claims

1. Conveyor installation with carrying bags (1, 1.0, 1.1) for products (7) to be conveyed, in particular items of clothing,
- with a conveying section (CD) with carriers (46), which are moveable in a conveying rail (43) in a conveying direction (44), to each receive a carrying bag (1, 1.0, 1.1),
- - wherein the carriers (46) are displaceably arranged individually in the conveying rail (43),
- - wherein each carrying bag (1, 1.0, 1.1) has a sack (15), in each case, with a width b in the conveying direction (44) to receive products (7) to be conveyed,
- - wherein for the width b in an unloaded state of the carrying bag (1.0), there applies: b = bₘᵢₙ, and
- - wherein for the width b in a maximum loaded state of the carrying bag (1.1), there applies: b = bₘₐₓ,
- with at least one back-up section (57, 59),
- with a spacer (41a), which is attached to each carrying bag (1, 1.0, 1.1) and is adjustable between a rest position (R) and a working position (A),
- - wherein, in the working position (A) on the back-up section (59), the spacer (41a) rests on a carrying bag (1.1) following in the conveying direction (44),
- - wherein the spacer (41 a) is dimensioned such that, in the working position (A), for the horizontal center spacing d of the adjacent carrying bag (1.1) resting on the spacer (41a), there applies:
d = bₘₐₓ, and
- - wherein the position of the spacer (41a) is stable in the working position (A) and in the rest position (R).

2. Conveyor installation according to claim 1, **characterized**
**in that** a first switching device (48) to adjust the spacer (41a) into the working position (A) is arranged upstream of the back-up section (59), and
**in that** a second switching device (49) to adjust the spacer (41a) into the rest position (R) is arranged downstream of the back-up section (59)

3. Conveyor installation according to any one of claims 1 to 2, **characterized**
**in that** at least one switching device (48, 49) has a sliding surface (51, 53) with a guide face (52, 54), which adjusts the spacer (41a).

4. Conveyor installation according to any one of claims 1 to 3, **characterized**
**in that** the spacer (41a) is mounted in a bearing housing (26, 27), which is arranged in an upper region of the carrying bag (1, 1.0, 1.1), to be pivotable between the working position (A) and the rest position (R).

5. Conveyor installation according to claim 3 and 4, **characterized**
**in that** the spacer (41a) is provided with an actuating lever (37), which is laterally guided out of the bearing housing (26, 27 and is bent in the manner of a crank arm and which actuating lever (37) is provided with a guide face (54) to pivot the spacer (41a).

6. Conveyor installation according to claim 3 and 4, **characterized in that** the spacer (41a) is to directly abutable to a guide face (52) of a sliding surface (51) to pivot the spacer (41a).

7. Conveyor installation according to any one of claims 1 to 6, **characterized**
**in that** on the back-up section (59), the spacer (41a) of a carrying bag (1.1) rests against a pressure piece (27) of a directly following carrying bag (1.1).

8. Conveyor installation according to claim 7, **characterized in that** the pressure piece (27) is part of the bearing housing (26, 27).

9. Conveyor installation according to any one of claims 1 to 8, **characterized**
**in that** the spacer (41a) in the bearing housing (26, 27) has an abutment portion (39), which is loaded by means of a compression spring (40) in such a way that the spacer (41 a) is held secured against unintentional pivoting in the working position (A) or the rest position (R).

## Revendications

1. Dispositif de transport muni de sacs (1, 1.0, 1.1) de support pour des marchandises (7) à transporter, notamment des vêtements,
- comprenant un circuit (CD) de transport, comportant des systèmes d'entraînement (46), pouvant être déplacés sur un rail (43) de transport dans un sens (44) de transport, chaque système étant destiné à la réception d'un sac (1, 1.0, 1.1) de support,
- - les systèmes d'entraînement (46) étant disposés individuellement sur le rail (43) de transport, en pouvant être déplacés,
- - chaque sac (1, 1.0, 1.1) de support présentant une poche (15) de sac, dans le sens (44) de transport, possédant une largeur b, destiné à l'admission de marchandises (7) à transporter,
- - la largeur b du sac (1.0) de support à l'état non chargé étant égale à b = bₘᵢₙ, et
- - la largeur b du sac (1.1) de support à l'état chargé au maximum étant égale à b = bₘₐₓ, et
- comprenant au moins une partie de stockage (57, 59),
- comprenant un espaceur (41a), rapporté à chaque sac (1, 1.0, 1.1), qui peut être déplacé entre une position de repos (R) et une position de travail (A),
- - l'espaceur étant adjacent à un sac (1.1) de support successif dans le sens (44) de transport sur la partie de stockage (59) dans la position de travail (A),
- - l'espaceur (41a) étant dimensionné de telle sorte sur l'on ait :
d = bₘₐₓ pour la distance médiane horizontale d du sac (1.1) de support adjacent à l'espaceur (41a) voisin dans la position de travail (A),
- - la position de l'espaceur (41a) étant stable dans le position de travail (A) et dans la position de repos (R).

2. Dispositif de transport selon la revendication 1, **caractérisé en ce**
**qu'**un premier dispositif de réglage (48) est disposé avant la partie de stockage (59) pour le réglage de l'espaceur (41a) dans la position de travail (A), et
**qu'**un second dispositif de réglage (49) est disposé après la partie de stockage (59) pour le réglage de l'espaceur (41a) dans la position de repos (R).

3. Dispositif de transport selon l'une des revendications 1 à 2, **caractérisé en ce**
**qu'**au moins un dispositif de réglage (48, 49) présente un patin (51, 53) comprenant une surface (52, 54) de guidage, qui règle l'espaceur (41a) .

4. Dispositif de transport selon l'une des revendications 1 à 3, **caractérisé en ce**
**que** l'espaceur (41a) est logé, en pouvant pivoter entre une position de travail (A) et une position de repos (R), dans la partie supérieure d'un logement (26, 27) de palier du sac (1, 1.0, 1.1) de transport.

5. Dispositif de transport selon les revendications 3 et 4, **caractérisé en ce**
**que** l'espaceur (41a) est muni d'un levier (37) d'actionnement dépassant latéralement du logement (26, 27) de palier et qui est plié en forme de manivelle, levier qui peut être mis en appui avec une surface de guidage (54) pour le pivotement de l'espaceur (41a).

6. Dispositif de transport selon les revendications 3 et 4, **caractérisé en ce**
**que** l'espaceur (41a) peut être immédiatement mis en appui avec une surface de guidage (52) d'un patin (51) pour le pivotement de l'espaceur (41a).

7. Dispositif de transport selon l'une des revendications 1 à 6, **caractérisé en ce**
**que** l'espaceur (41a) d'un sac (1.1) de support est appuyé sur une pièce de compression (27) du sac (1.1) de support successif immédiat.

8. Dispositif de transport selon la revendication 7, **caractérisé en ce**
**que** la pièce de compression (27) constitue une partie du logement de palier (26, 27).

9. Dispositif de transport selon l'une des revendications 1 à 8, **caractérisé en ce**
**que** l'espaceur (41a) présente une partie de butée (39) dans le logement de palier (26, 27) qui est contrainte à l'aide d'un ressort de compression (40) de telle sorte que l'espaceur (41a) est maintenu en sécurité vis à vis d'un pivotement non souhaité dans la position de travail (A) ou dans la position de repos (R).
